# EUROPEAN PATENT SPECIFICATION

(11) **EP 0 283 281 B1**
(45) Date of publication and mention of the grant of the patent: **03.02.1993**
(21) Application number: 88302329.3
(22) Date of filing: 17.03.1988
(51) Int. Cl.: H04N 5/94

(54) **Drop-out compensator circuit**
Schaltung zum Korrigieren von Signalausfällen
Circuit de correction de lacunes

(30) Priority: 17.03.1987 JP 39443/87
(43) Date of publication of application: 21.09.1988
(73) Proprietor: PIONEER ELECTRONIC CORPORATION, Meguro-ku Tokyo 153 (JP)
(72) Inventor: Takemura, Shinichi Pioneer Electronic Corporation, Tokorozawa-shi Saitama (JP)
(74) Representative: Brunner, Michael John

(56) References cited:
- FR-A- 2 316 809
- US-A- 3 366 732
- US-A- 4 006 295
- US-A- 4 199 780
- PATENT ABSTRACTS OF JAPAN, vol. 6, no. 144 (E-122)[1022], 3rd August 1982; & JP-A-57 65 968

## Description

The present device relates to a drop-out correction circuit for image signals.

A drop-out correction circuit is essential for detecting and correction for drop-outs caused by dirt or damage to a recording medium in a playback device which reads a data signal from a recording medium such as a video disk.

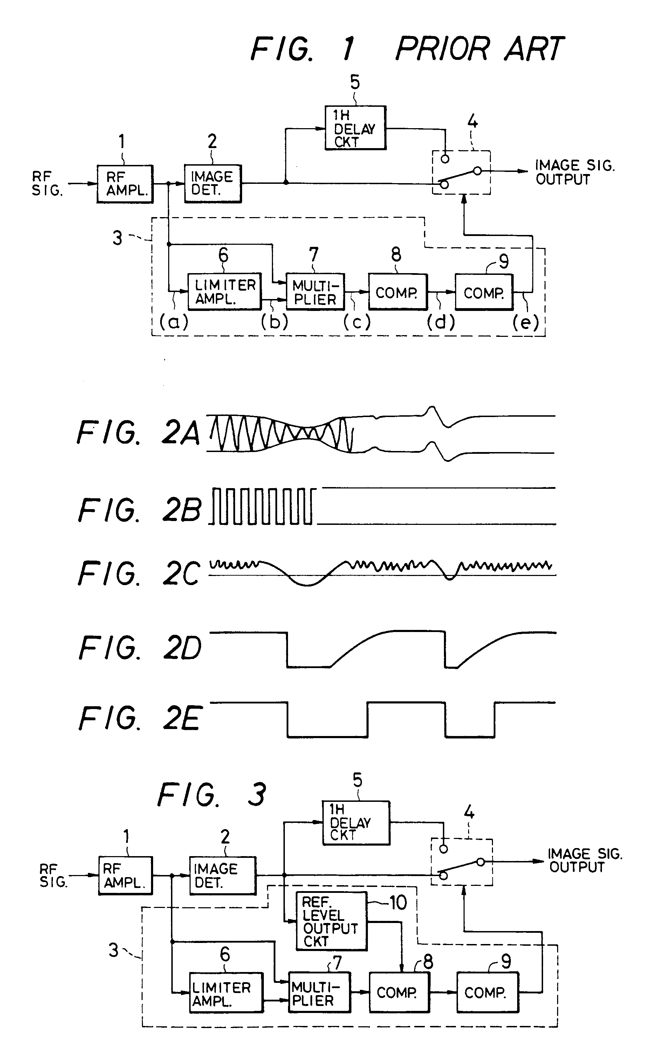

An example of a conventional drop-out correction circuit is shown in Fig. 1. In this drop-out correction circuit, the RF (high-frequency) signal (Fig. 2A) forming the read-out signal from a recording disk is amplified by an RF amplifier 1 and supplied to a video demodulator 2 and to a drop-out detector 3. The video demodulator 2 is composed of an FM demodulator or the like, which outputs a color video signal extracted from the RF signal. This video signal is supplied to one of the terminals of switch 4 directly and to its other terminal via a lH (horizontal period) delay circuit 5. In the drop-out detector 3, the amplitude of the RF signal is limited by a limiter amp 6, thus converting the signal to a pulse train signal, as shown in Fig. 2B. This pulse train signal is multiplied with the RF signal by a multiplier 7, and as the result is output as an RF signal with envelope elements, as shown in Fig. 2C, to a comparator 8. A reference signal is also supplied to the comparator 8. If the level of the signal with envelope elements is lower than the reference level, the output level of the comparator 8 immediately drops from a high to a low level. If the level of the envelope signal is higher than the reference level, the output level of the comparator 8 gradually changes with a specified time constant from a low to a high level. The output signal of the comparator 8 (Fig. 2D) is fed to another comparator 9 where it is compared with the reference level of the comparator 9. The low level output of comparator 9 (Fig. 2E) is fed to the activating terminal of the switch 4 as a drop-out detector pulse.

In the absence of a drop-out detector pulse, the switch 4 outputs the video signal from the video demodulator 2, but when a drop-out detector pulse is present, it outputs the 1H delayed signal from the delay circuit 5.

With such a conventional drop-out correction circuit, the reference level of the comparator 8 is preset at a fixed level. To improve the sensitivity of the drop-out detector in order to handle brief drop-outs with little fluctuation, it is sufficient to set the reference level of the comparator 8 at a higher level. However, if the sensitivity is raised too much, the comparator will pick up other elements in the RF signal as well as drop-outs, with the result that repeated switching of the video signal occurs at the switch 4, and hence the video signal is over-compensated, leading to the adverse effects such as flicker and distortion of the image of the screen. This is particularly evident with brighter images. Nonetheless, it is necessary to raise the sensitivity to the level of over-correction in order to detect brief drop-outs, since if the sensitivity is too low, the inadequate correction for brief drop-outs becomes a problem, especially with darker images.

FR-A-2 316 809 discloses a drop-out detecting circuit in which the reference level is adjusted in accordance with the level of the RF signal to provide a substantially constant sensitivity, regardless of the amplitude of the RF signal.

An object of the invention is to provide a dropout correction circuit that, while preventing deterioration of the image, has a relatively high degree of detection sensitivity with respect to brief drop-outs and whose sensitivity is adjusted to avoid annoying flicker and distortion.

According to the present invention there is provided a drop-out correction circuit for video signals, comprising:
detection means for detecting specific predetermined components of high-frequency signals read from a recording medium and which include the video signals;
demodulating means for demodulating the high-frequency signals to generate a composite video signal including a luminance component and a chrominance component;
comparator means for comparing the output level of the detection means with a reference level and producing a drop-out detection pulse in response to the results of the comparison; characterised by
means for setting the reference level of the comparator in accordance with the level of the luminance component of the video signal output by the demodulating means.

Two examples of correction circuits according to the invention will now be described with reference to the accompanying drawings, in which:-
Fig. 1 is a block diagram illustrating a drop-out correction circuit of the prior art;
Figs. 2A - 2E are waveform diagrams illustrating the function of various circuits in Fig. 1;
Fig. 3 is a block diagram illustrating a preferred embodiment of the device;
Fig. 4 is a block diagram showing the specific composition of a reference level signal generating circuit in Fig. 3;
Fig. 5 is a block diagram illustrating another embodiment of the invention; and
Figs. 6A - 6C are waveform diagrams illustrating the function of various circuits in Fig. 5.

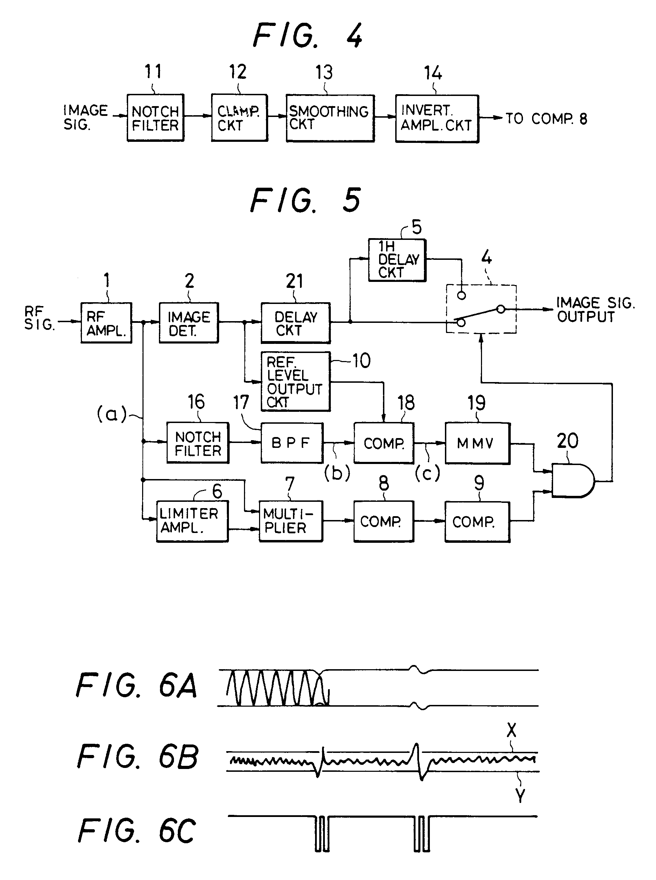

A preferred embodiment of the invention will now be described with reference to Figs. 3 and 4.

In Fig. 3, elements identical to those of the drop-out compensation circuit shown in Fig. 5 are labelled with the same numbers.

In the preferred embodiment, the color video signal output from the video demodulator 2 is supplied to switch 4 and delay circuit 5, and also to a reference level signal generator circuit 10.

The reference level signal generator circuit 10, as shown in Fig. 4, is composed of a notch filter 11 which removes the color subcarrier component from the color video signal and selects the brightness component, a clamping circuit 12 which shifts the output voltage of the notch filter 11 by a fixed level in a positive direction, a smoothing circuit 13 which smooths the output voltage of clamping circuit 12, and an inverting amplifier circuit 14 which inverts and amplifies the output voltage from smoothing circuit 13. The output voltage from the inverting amplifier circuit 14 is fed to the comparator 8 as the reference level signal.

The remainder of the device is constituted as shown in Fig. 1, and will thus not be explained in further detail. However, it may be noted that the output voltage from the inverting amplifier circuit 14 may be split using a voltage divider before being fed to the comparator 8.

In the above arrangement the luminance component of the color video signal output from the video demodulator 2 is separated out by notch filter 11, and by passing the output of the notch filter 11 through the clamping circuit 12 and smoothing circuit 13, a continuously varying luminance signal is obtained. Since the level of the luminance signal increases with the brightness of the screen image, inverse amplication of the output of the smoothing circuit 13 by the inverting amplifier circuit 14 provides a falling voltage, i.e., reference level, from the amplifier circuit 14 with increasing luminous element level. Thus as the luminous element level, increases, the reference level drops, and thus the output voltage of the multiplier 7 during brief drop-outs with little level fluctuation becomes greater than the reference level. As a result, there is no low level output from the comparator 8 and the drop-out detection sensitivity decreases. When the luminous element level decreases, the reference level increases, and thus the output of the multiplier 7 during brief drop-outs with little fluctuation is lower than the reference level. As a result, a low level output from the comparator 8 is generated, a drop-out detector pulse is produced, and the drop-out detection sensitivity increases.

By employing an adjustable time constant for the smoothing circuit 13, it is possible to provide a reference level corresponding to the brightness of each frame when the time constant is large, and when it is small a reference level corresponding to the average luminous element level of one horizontal synchronous period can be obtained.

Fig. 5 shows another embodiment of the present invention. By passing the RF signal output from an RF amplifier (Fig. 6A) through a notch filter 16 which removes the sound carrier, and a BPF (bandpass filter) 17 which lets pass input signals of, for example, 1-2 MHz, components of a specific frequency can be separated out from the RF signal, as shown in Fig. 6B. The level of the specific frequency components is then compared in a window-comparator 18 with the output level of a reference level signal generator circuit 10. The reference level signal generator circuit 10 produces positive and negative reference signals X and Y, whereby the range between the positive and negative reference levels increases luminous element level. When the level of the specific frequency components is beyond the range of the reference positive and negative levels, the output level of the comparator 18 drops to a low level as shown in Fig. 6C, which low level causes a MMV (monostable multivibrator) 19 to emit low level drop-out detector pulses at specified intervals. An AND gate 20 feeds drop-out detector pulses from the MMV 19 and from the comparator 9 to the switch 4. The device is thus arranged so that the notch filter 16, BPF 17, comparator 18 and MMV 19 function as a brief drop-out detector circuit whose detection sensitivity varies with the luminous element level of the video signal, and the limitater amplifier 6, multiplier 7, and comparators 8 and 9 function as a circuit of fixed sensitivity for detecting relatively longer drop-outs. The delay circuit 21 is inserted in the video signal line to compensate for the signal delay to the AND gate 20.

As explained above, in the drop-out corrector circuit of the present invention, the reference level is set according to luminous element level of the video signal, and since drop-out is detected by comparing the level of specific components of the high-frequency signal with the reference level, the drop-out detection sensitivity decreases with increasing image brightness, thus preventing such undesirable effects of overcompensation a flicker and distortion which stand out in bright images. At the same time, since the drop-out detection sensitivity increases with a reduction in image brightness, the device is able to accurately detect brief drop-outs and thus prevent image distortion and the like caused by brief drop-outs. It is thus able to provide more appropriate drop-out correction.

## Claims

1. A drop-out correction circuit (3) for video signals, comprising:
detection means (6,7) for detecting specific predetermined components of high-frequency signals read from a recording medium and which include the video signals;
demodulating means (2) for demodulating the high-frequency signals to generate a composite video signal including a luminance component and a chrominance component;
comparator means (8,9) for comparing the output level of the detection means with a reference level and producing a drop-out detection pulse in response to the results of the comparison; characterised by
means (11-14) for setting the reference level of the comparator in accordance with the level of the luminance component of the video signal output by the demodulating means (2).

2. A drop-out correction circuit as claimed in claim 1, wherein the detector means comprises means (6,7) for detecting envelope components in the high-frequency signal.

3. A drop-out correction circuit as claimed in claim 1, wherein the detector means comprises means (16,17) for detecting specific predetermined frequency components in the high-frequency signal.

## Patentansprüche

1. Ausfallkorrektur-Schaltung (3) für Bildsignale, mit:
einer Erfassungseinrichtung (6, 7) zum Erfassen spezifischer vorbestimmter Bestandteile von Hochfrequenzsignalen, die aus einem Speichermedium gelesen werden und die Bildsignale einschließen;
einem Demodulator (2) zum Demodulieren der Hochfrequenzsignale und Erzeugen eines zusammengesetzten Bildsignals, welches eine Luminanzkomponente und eine Chrominanzkomponente besitzt;
einer Vergleichseinrichtung (8, 9) zum Vergleichen des Ausgangspegels der Erfassungseinrichtung mit einem Bezugspegel und zum Erzeugen eines Ausfallerfassungsimpulses in Abhängigkeit von den Ergebnissen des Vergleichs; gekennzeichnet durch
eine Einrichtung (11...14) zum Setzen des Bezugspegels der Vergleichseinrichtung gemäß dem Pegel der Luminanzkomponente des vom Demodulator (2) ausgegebenen Bildsignals.

2. Ausfallkorrektur-Schaltung nach Anspruch 1, bei der die Erfassungseinrichtung Einrichtungen (6, 7) zum Erfassen von Hüllkurvenkomponenten im Hochfrequenzsignal umfaßt.

3. Ausfallkorrektur-Schaltung nach Anspruch 1, bei der die Erfassungseinrichtung Einrichtungen (16, 17) zum Erfassen spezifischer vorgegebener Frequenzkomponenten im Hochfrequenzsignal umfaßt.

## Revendications

1. Circuit de correction de perte d'information (3) pour signaux vidéo, comprenant :
un moyen de détection (6, 7) pour détecter des composantes prédéterminées spécifiques de signaux haute fréquence qui sont extraits d'un support d'enregistrement et qui incluent les signaux vidéo ;
un moyen de démodulation (2) pour démoduler les signaux haute fréquence afin de générer un signal vidéo composite incluant une composante de luminance et une composante de chrominance ;
un moyen de comparateur (8, 9) pour comparer le niveau de sortie du moyen de détection à un niveau de référence et pour produire une impulsion de détection de perte d'information en réponse aux résultats de la comparaison ;
caractérisé par :
un moyen (11 - 14) pour établir le niveau de référence du comparateur en relation avec le niveau de la composante de luminance du signal vidéo émis en sortie par le moyen de démodulation (2).

2. Circuit de correction de perte d'information selon la revendication 1, dans lequel le moyen de détecteur comprend un moyen (6, 7) pour détecter les composantes d'enveloppe dans le signal haute fréquence.

3. Circuit de correction de perte d'information selon la revendication 1, dans lequel le moyen de détecteur comprend un moyen (16, 17) pour détecter des composantes de fréquences prédéterminées spécifiques dans le signal haute fréquence.
